Europäisches Patentamt

European Patent Office

Office européen des brevets

(11) Publication number: **0 506 141 A1**

## (12) EUROPEAN PATENT APPLICATION

(21) Application number: **92105486.2**

(22) Date of filing: **30.03.92**

(51) Int. Cl.⁵: **B60G 3/26**, B60G 7/02,
B62D 17/00, F16F 1/38

(30) Priority: **29.03.91 JP 88962/91**

(43) Date of publication of application:
**30.09.92 Bulletin 92/40**

(84) Designated Contracting States:
**DE ES FR GB IT**

(71) Applicant: **YAMAHA HATSUDOKI KABUSHIKI KAISHA**
**2500 Shingai**
**Iwata-shi Shizuoka-ken, 438(JP)**

(72) Inventor: **Nishida, Kazuhiro, c/o 2500 Shingai Iwata-shi**
**Shizuoka-ken 438(JP)**
Inventor: **Maeda, Masashi, c/o 2500 Shingai Iwata-shi**
**Shizuoka-ken 438(JP)**

(74) Representative: **Patentanwälte Grünecker,**
**Kinkeldey, Stockmair & Partner**
**Maximilianstrasse 58**
**W-8000 München 22(DE)**

(54) Suspension mechanism for vehicles.

㊼ A number of embodiments of independent suspension systems for vehicle wheels of the double wishbone type. In each embodiment, the lower arm is divided into a pair of pivotally connected lower arms and means are provided for controlling the position of the pivotal connection upon suspension travel for limiting changes in the distance between the center of contact of the wheel with the ground and the body during the suspension travel.

Fig. 1

## BACKGROUND OF THE INVENTION

This invention relates to a suspension mechanism for vehicles and more particularly to an improved independent suspension for a wheel of a vehicle.

A very popular form of independent suspension for vehicular wheels is of the so-called double wishbone type. With this type of suspension there are a pair of upper and lower arms that have a generally A-shaped configuration with the axle carrier being pivotally mounted at the narrow outer end of the arms. The base of the arms are pivotally connected to the vehicle body in a suitable so that the arms will pivot during the suspension travel of the wheel. One disadvantage with this type of construction is that with conventional double wishbone type of constructions the center of the contact patch of the wheel with the ground moves through an arc upon suspension travel. Because of this, there is a tendency for a lateral force to be exerted on the vehicle during suspension travel. Since the frictional forces between the wheels at the opposite side of the vehicle and the ground are never exactly equal, these forces will, therefore, cause some slight slippage of the center line of the vehicle upon suspension travel, even when traveling in a straight ahead direction. This is, therefore, clearly undesirable.

It is, therefore, a principal object to this invention to provide an improved suspension system of the general double wishbone type wherein difference in distance between the center of contact of the tires and the ground and the vehicle body during suspension travel are substantially reduced.

It is a further object to this invention to provide an improved compact independent wheel suspension for a vehicle that will permit adequate suspension travel but will also reduce side slipping of the vehicle during suspension travel.

## SUMMARY OF THE INVENTION

This invention is adapted to be embodied in a suspension system for suspending a vehicle wheel and vehicle body. The suspension system comprises an axle carrier for supporting a wheel for rotation about a wheel axis. A first arm has a first pivotal connection to the axle carrier and a second pivotal connection to the body. A second arm has a third pivotal connection to the axle carrier and a fourth pivotal connection to a third arm. The third am has a fifth pivotal connection to the body. Means are provided for moving the fourth pivotal connection relative to the fifth pivotal connection upon suspension movement between the wheel and the body in a way to minimize changes in difference in the distance between the body and the center of the wheel upon suspension movement.

## BRIEF DESCRIPTION OF THE DRAWINGS

Figure 1 is a cross sectional view taken from the rear showing the left hand suspension of a front wheel of a motor vehicle constructed in accordance with a first embodiment of the invention.

Figure 2 is a bottom plan view of the front wheel suspension.

Figure 3 is an enlarged cross sectional view taken along the line 3 - 3 of Figure 1.

Figure 4 is a cross sectional view taken along the line 4 - 4 of Figure 3.

Figure 5 is an enlarged cross sectional view taken along the line 5 - 5 of Figure 2.

Figure 6 is an enlarged cross sectional view taken along the line 6 - 6 of Figure 1.

Figure 7 is a partially schematic front elevational view, in part similar to Figure 1, and shows another embodiment of the invention.

Figure 8 is a cross sectional view, in part similar to Figure 1 and to Figure 7, and shows a third embodiment of the invention.

Figure 9 is a top plan view of this embodiment.

Figure 10 is an enlarged cross sectional view taken along the line 10 - 10 of Figure 9.

## DETAILED DESCRIPTION OF THE PREFERRED EMBODIMENTS OF THE INVENTION

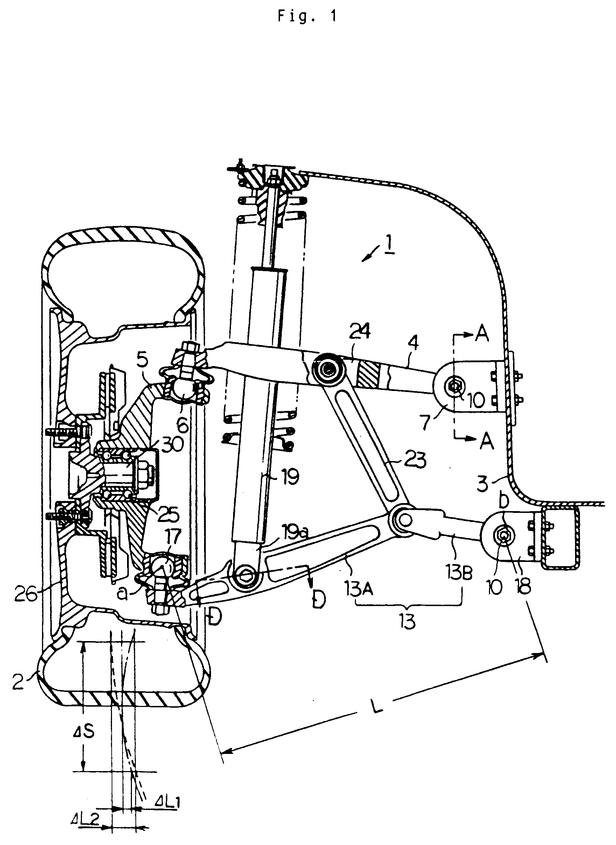

Referring now in detail to the drawings and initially to the embodiment of Figures 1 through 6, a front wheel suspension for a motor vehicle is identified generally by the reference numeral 21. In all of the embodiments of the invention which will be described, the suspension system is that for a steered front wheel of a vehicle. It should be readily apparent to those skilled in the art that the invention may also be employed in conjunction with rear wheels that are independently suspended and also rear wheels which have some steering effect on them.

The suspension system 21 suspends a front wheel assembly, indicated generally by the reference numeral 22 which is comprised of a wheel 23 and a tire 24 relative to a portion of a motor vehicle body, indicated by the reference numeral 25. The wheel 22 has affixed to it a brake rotor 26 which, in turn, has an axle 27 rotatably journaled in a axle carrier 28.

A first upper suspension arm 29 having a generally wishbone or A configuration has a ball joint 31 at its outer end which provides a spherical connection to the upper end of the axle carrier 28 so as to permit pivotal movement of the axle carrier 28 relative to the arm 29 about a generally horizontally extending pivot axis and steering movement about a generally vertically extending axis.

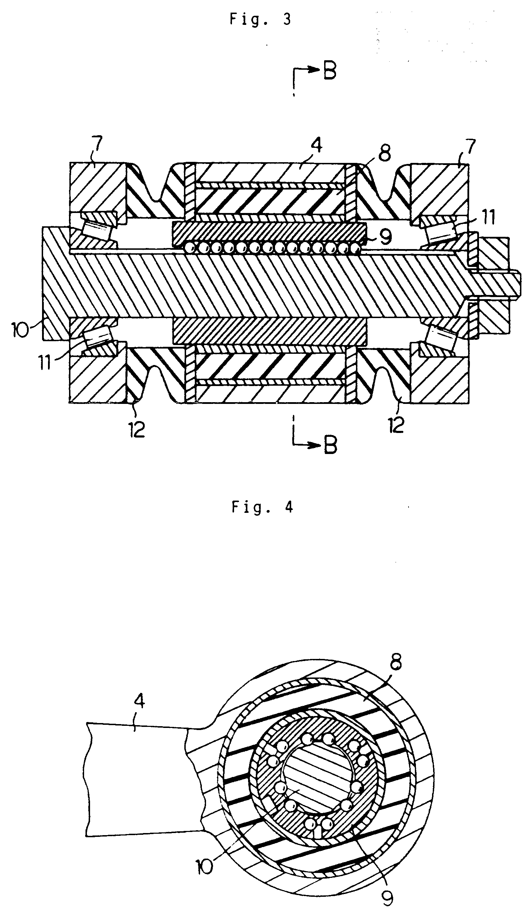

The opposite end of the upper A arm 29 has pivotal connections to a pair of spaced apart bracket assemblies 32 that are affixed in a suitable manner to the body 25 and which pivotal connections are best shown in Figures 3 and 4. As may be seen, the ends of the upper arm 29 have cylindrical sections 33 in which elastomeric sleeves 34 having external metallic sleeves 35 are pressed. An inner metal sleeve 36 encircles a bearing assembly 37 which is, in turn, journaled on a respective pivot pin 38. The pivot pin 38 is, in turn, journaled in the brackets 32 by means of thrust bearings 39. A pair of elastic stoppers 41 are disposed between opposite ends of the portions 33 of the arm 29 and the brackets 32 so as to provide fore and aft position control. The elastic stoppers 41 will permit some compliance in a fore and aft direction while the elastic sleeve 34 will provide for some compliance in transverse directions.

In addition to the upper arm 29, the axle carrier 28 is suspended relative to the body 25 by a lower arm assembly, indicated generally by the reference numeral 42. Unlike conventional double wishbone constructions, however, the lower arm assembly 42 is comprised of two separate pivotally connected arms, indicated by the references numerals 43 and 44, respectively. The arm 43 also has a wishbone or A-shape and carries at its out end a ball joint 45 to which the axle carrier 28 is pivotally connected. The ball joints 31 and 45 define the steering axis about which the front wheel 22 is steered, in a manner to be described. In addition, the ball joint 45 permits pivotal movement about a transverse axis between the arm 43 and the axle carrier 28.

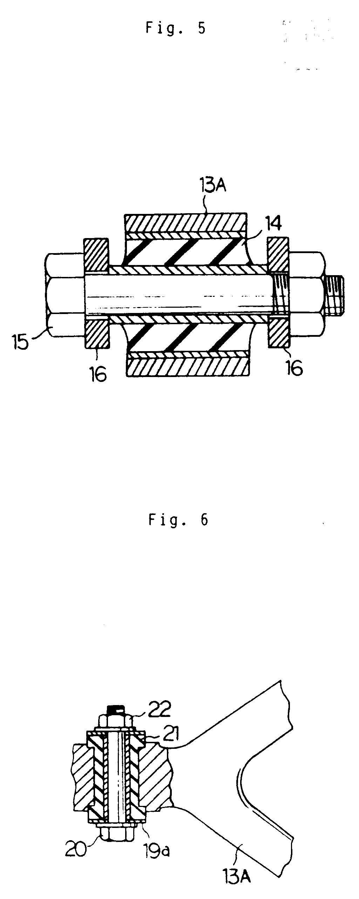

The inner arm 44 has a generally H-shaped configuration and includes a spaced apart bifurcated end portions 46 that are pivotally connected to corresponding portions 47 of the arm 43 by means of pivot bolts 48 (Figure 5). A suitable elastic coupling 50 is provided in the pivot joints between the arm portions 46 and 47.

The inner legs of the inner arm 44 are pivotally connected to frame body brackets 49 by means of pivot connection, indicated generally by the reference numeral 51 and which may have the same general type of construction as the pivot connection between the upper arm 29 and the body brackets 32.

The path of movement of the pivot joint defined by the pivot pins 48 is controlled during suspension travel by means of a control link 52 which has a pivotal connection to the inner lower arm 44 that is aligned with the pivot axis between the lower arms 43 and 44. This pivotal connection is formed by a pair of brackets 53 that are formed integrally with the center of the H-cross bar of the inner arm 44 and a pivot pin 54 that extends through an eyelet in the control link 52. A similar upper pivotal connection is provided between a pair of brackets 55 formed integrally with the upper arm 29 and through which a pivot pin 56 passes through an eyelet in the upper end of the control link 52.

A combined coil spring and hydraulic shock absorber, indicated generally by the reference numeral 57 is connected at its upper end to the body 25 by means of a joint 58 and has its lower end 59 connected to the outer lower arm portion 43 by means of a pivot bolt 61 and elastic joint 62 as best seen in Figure 6. A nut 63 threaded onto the bolt 61 and a pair of locating washers or shims 64 and 65 complete this connection, which is of a well known type.

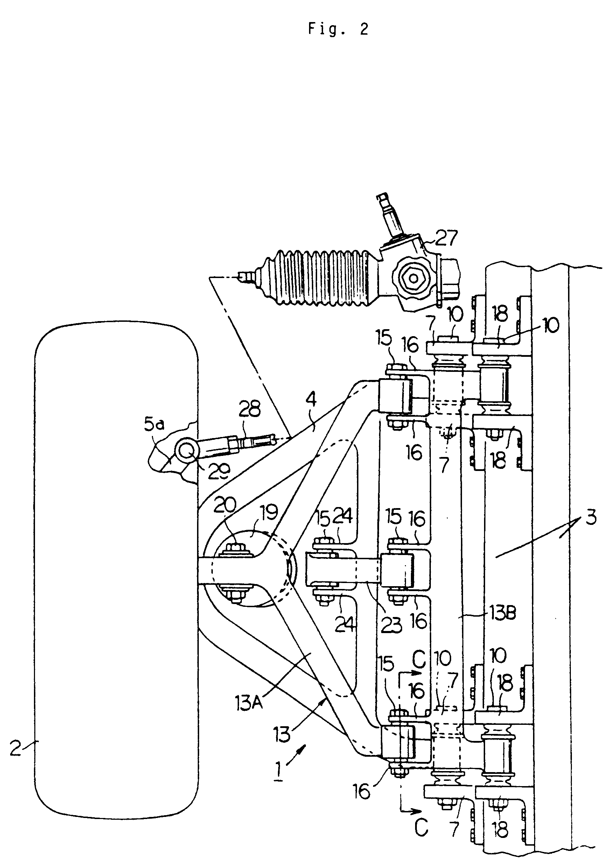

A steering gear box 66 (Figure 2) operates a tie rod 67 which has a pivotal connection 68 to a steering arm 69 formed integrally with the axle carrier 28 for steering it about the aforenoted steering axis defined by the ball joints 31 and 45.

The advantages of the use of the double arm lower arm construction may be understood by reference to Figure 1. It should be noted that the lower arm 42 has a pivotal connection b to the body 25 and a pivotal connection a to the axle carrier 28 which are spaced apart a distance L. If a single arm were utilized for the lower arm 42 as with conventional constructions, the jounce and rebound movement of the front wheel $\Delta s$ would cause the center of the tire 24 to pass along an arc as shown by the broken line in this figure. Hence, from full jounce to full rebound the lateral movement of the center of the front wheel would travel through the distance $\Delta L_2$ or a substantial distance relative to the body. Because of this distance $\Delta L_2$ in the distance between the center of the contact patch of the tire 24 with the ground relative to the body 25 will tend to move transversely. If there is a different frictional resistance between the wheels at the opposite side of the body, as is inherit, then the body will tend to shift toward one side or the other event when traveling in a straight ahead direction. This is obviously undesirable.

Because of the use of the double arm and control link 52, however, the movement of the center of the front tire can be confined as shown by the . - line in this figure so that the actual lateral movement is $\Delta L_1$ is relatively small and the likelihood of transverse body movement will be substantially reduced.

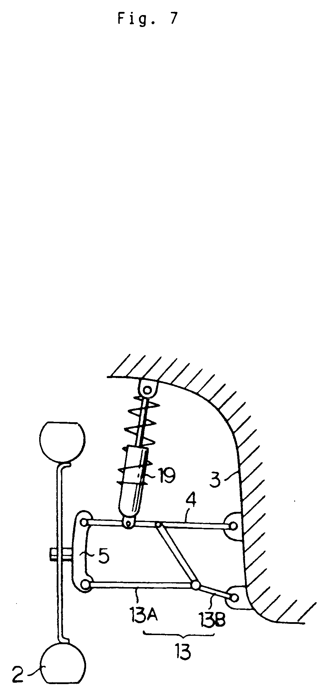

Figure 7 shows another embodiment of the invention which is generally similar to the embodiment of Figures 1 through 6 and differs from that embodiment only in the position and loading of the suspension element 57. For that reason, the components have been schematically in this figure and those which are the same have been identified by the same reference numerals.

In this embodiment, the suspension element 57 is loaded between the upper arm 29 and the body 25 rather than between the lower arm outer portion 43 and the body. In some applications, this type of arrangement may be preferred.

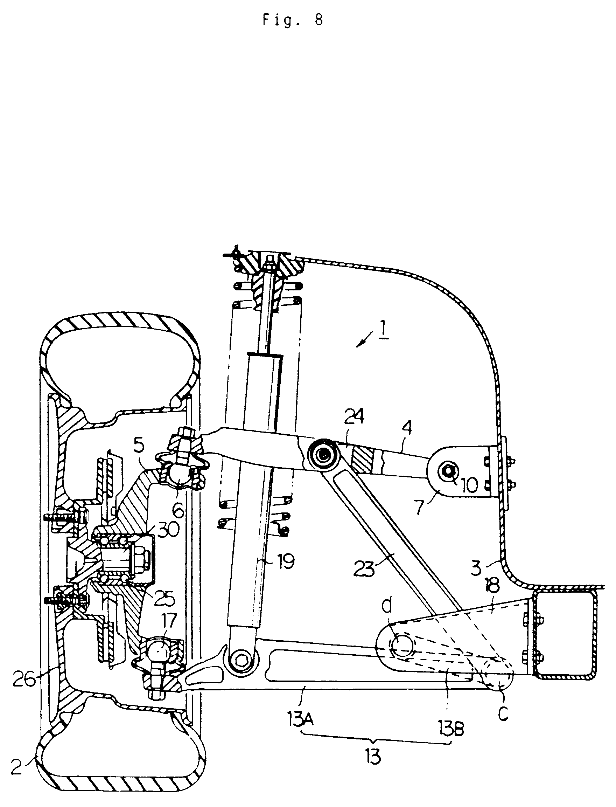

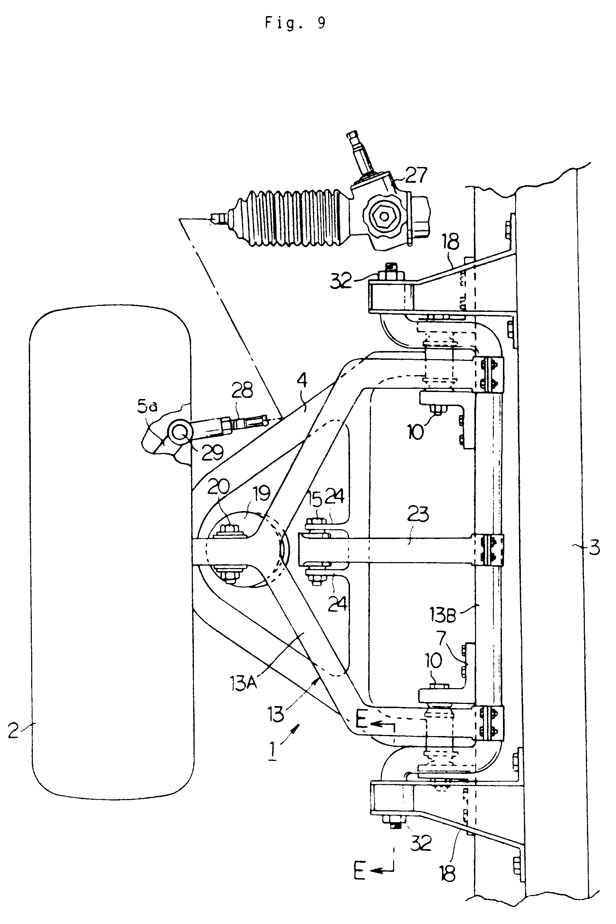

Figures 8 through 10 show a front wheel suspension constructed in accordance with another embodiment of the invention. This embodiment is generally similar to the embodiment of Figures 1 through 6 and for that reason, components which are the same or substantially the same have been identified by the same reference numerals.

In the embodiment of Figures 1 through 6, the pivotal connection provided for by the pivot pin 48 between the lower outer and inner arm portions 43 and 44 was disposed between the pivot point b of the lower arm inner portion 44 with the body 25 and the pivotal connection a between the ball joint 45 and the outer end of the lower outer arm portion 43 and the axle carrier 28. As a result, the suspension is somewhat elongated and may encroach into the engine compartment or passenger area.

In the second embodiment according to Figs. 8 to 10 an advantageous modification of the afore-described embodiment can be obtained by moving the pivotal connection between the pivot point 48, indentified by the reference character c inboard of the pivotal connection d between the inner lower arm portion 44 and the body 25 formed, in this embodiment, by an elongated mounting bracket 101. By reversing this arrangement in the pivot points, it is possible to provide a more compact suspension and still achieve the same results as with the embodiments previously described.

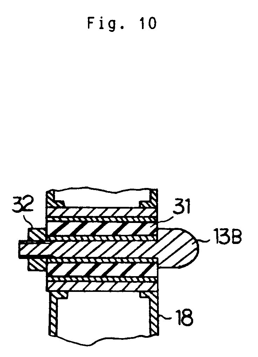

The pivotal connection between the lower arm portion 44 and the bracket 101 is best shown in Figure 10. It may be seen that an elastic joint 102 encircles the end 103 of the lower arm 44 and a nut 104 is threaded onto this portion of the lower arm so as to hold the components in position. In all other regards, this embodiment is the same as that previously described and, for those reasons, further description of this embodiment is not believed to be necessary.

In the illustrated embodiments, the control link 52 has its pivotal connection to the third arm portion 44 and aligned with the pivot axis defined by the pivot pins 48. It should be readily apparent that the pivotal connection between the control link 52 and the arm assembly 42 may be to the lower arm portion 43 rather than to the lower arm portion 44 or maybe directly to the pivotal connection between the two arm portions 43 andf 44 or an area closely adjacent to said pivotal connections.

It should be readily apparent from the foregoing description that the described suspension systems provvide extremely good suspension control, a minimum tendency of the body 25 to slip sideways during suspension travel.

Accordingly, the present invention is effective in preventing the left and right wheels from moving laterally and relatively to the body 25 when the wheels move up and down, thus avoiding any lateral displacement of the body 25 caused by differences in frictional resistance between left and right wheels.

## Claims

1. A suspension system for suspending a vehicle wheel and a vehicle body, said suspension systems comprising an axle carrier (28) for supporting said wheel for rotation about a wheel axis, a first arm (29), means (31) for providing a first pivotal connection between said first arm (29) and said axle carrier (28), means providing a second pivotal connection between said first arm (28) and said body (25), a second arm (43), means (45) providing a third pivvotal connection between said second arm (43) and said axle carrier (28) spaced from said first pivot means (31), a third arm (44), means for providing a fourth pivotal connection between said third arm (44) and said body (25) spaced from said second pivotal means, means (47, 48) providing a fifth pivotal connection between said second arm (43) and said third arm (44), and means (52) for moving said fifth pivotal connection (47, 48) relative to said fourth pivotal connection upon suspension movement between said wheel and said body (25) for changes in the distance between the point of contact of said wheel (22) with the ground relative to said body upon suspension movement.

2. A suspension system as set forth in claim 1 wherein moving the fifth pivotal connection comprises a control link (52) having a sixth pivotal connection (54) to the third arm (44) aligned with the means (47, 48) providing the fifth pivotal connection.

3. A suspension system as set forth in claim 2 wherein the control link (52) has a seventh pivotal connection (56) to the first arm (29).

4. A suspension system as set forth in claim 3 wherein the seventh pivotal connection lies between the means providing the first and second pivotal connections.

5. A suspension means as set forth in claim 1 wherein the means providing the first and third pivotal connections include ball joints for steering of the axle carrier.

6. A suspension system as set forth in claim 1 further including a suspension element for damping the suspension movement of the wheel relative to the vehicle body.

7. A suspension system as set forth in claim 6 wherein the suspension element is loaded between one of the arms and the body.

8. A suspension system as set forth in claim 2 wherein the suspension element is loaded between the second arm and the body.

9. A suspension system, specifically front wheel vehicle suspension mechanism of the double wishbone type, comprising upper and lower arms and an axle carrier connecting one end of the upper and lower arms which, with their opposite ends, are hingedly connected to a body frame of the vehicle so that said upper and lower arms are swingable vertically, **characterised in that,** the lower arm (42) is composed of two members (43, 44) which are hingedly connected to each other so as to be swingable up and down relative to each other.

10. A suspension system as claimed in claim 9 **characterised in that,** an intermediate portion of the upper arm (29) is swingably linked to an intermediate portion of at least one of the members (43m 44) of the lower arm (42) by means of a control link (52) (23) which is hingedly connected at its both opposite ends to the upper arm and lower arm members (29, 42) respectively.

11. A suspension system as claimed in claims 9 or 10, **characterised in that,** the one (43) of the two members (43, 44) is in a Y-shaped form while the other member (44) is substantially in an H-shaped form.

12. A suspension system as claimed in at least one of the preceding claims 9 to 11, **characterised in that**, the joint connecting the one end of the connecting control link (52) to the intermediate portion of the one member (44) of the lower arm (42) is substantially axially aligned to the joints hingedly connecting the forked ends of the Y-shaped member (43) of the lower arm with the other H-shaped lower arm member (44).

13. A suspension system as claimed in at least one of the preceding claims 9 to 12, **characterised in that,** a shock absorber (57) is hingedly connected to the one member (43) of the lower arm (42) or a portion of the upper arm (29) while the opposite end of the shock absorber (19) is connected to the body frame (25).

14. A suspension system as claimed in at least one of the preceding claims 9 to 13, **characterised in that,** both members (43,44) of the lower arm (42) form a folded link wherein the one member (44) rotatably supported at the side of the body frame (25) comprises bent end portions to establish joints (103, 104) for swingably supporting said member (44) at projecting brackets (101) of the body frame (25), whereas the other member (43) is hingedly supported

at the straight portions of the other member (44) inwardly of the joints (103, 104) respectively.

15. A suspension system as claimed in at least of the preceding claims 9 to 14, **characterised in that** the body frame-side end of the upper arm (29) is supported to be rotatable around a bearing shaft as well as to be moveable in the axial direction of said bearing shaft.

Fig. 1

Fig. 2

Fig. 3

Fig. 4

8

Fig. 5

Fig. 6

Fig. 7

Fig. 8

Fig. 9

Fig. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X<br>Y<br>A | US-A-3 161 419 (GENERAL MOTORS CORP.)<br>* the whole document *<br><br>--- | 1-5<br>9,10<br>11,12 | B60G3/26<br>B60G7/02<br>B62D17/00<br>F16F1/38 |
| X<br>Y | US-A-3 118 687 (GENERAL MOTORS CORP.)<br>* figures *<br><br>--- | 1<br>9,10 | |
| X<br><br><br><br>Y | PATENT ABSTRACTS OF JAPAN<br>vol. 13, no. 247 (M-835)(3595) 8 June 1989<br>& JP-A-1 056 216 ( MAZDA MOTOR CORP. ) 3 March 1989<br>* abstract; figures 1,2 *<br><br>--- | 1,5-7<br><br><br><br>9-11,13 | |
| X<br>Y<br>A | FR-A-1 113 714 (H. FERGUSON RESEARCH)<br>* figures 4,4A *<br><br>--- | 1,6,7<br>9-11,13<br>8 | |
| X<br>A | DE-A-3 730 212 (BAYERISCHE MOTOREN WERKE)<br>* figures *<br><br>--- | 1-4<br>9,10,12 | |
| X,P<br>A,P | WO-A-9 108 918 (YOROZU MANUFACTURING CORP.)<br>* abstract; figures *<br><br>----- | 1,5-7<br>2-4,9,<br>10,13 | TECHNICAL FIELDS SEARCHED (Int. Cl.5)<br><br>B60G<br>F16F<br>B62D |

The present search report has been drawn up for all claims

| Place of search | Date of completion of the search | Examiner |
|---|---|---|
| THE HAGUE | 26 JUNE 1992 | TSITSILONIS  L. |